# FASCICULE DE BREVET EUROPEEN

(11) **EP 2 078 294 B1**
(45) Date de publication et mention de la délivrance du brevet: **27.01.2016**
(21) Numéro de dépôt: 07858669.0
(22) Date de dépôt: 06.11.2007
(51) Int. Cl.: G08B 13/12, G08B 13/14, G06F 21/70

(54) **DISPOSITIF ANTI-INTRUSION**
EINDRINGUNGSSCHUTZVORRICHTUNG
ANTI-INTRUSION DEVICE

(30) Priorité: 10.11.2006 FR 0654844
(43) Date de publication de la demande: 15.07.2009
(73) Titulaire: Ingenico Group, 75015 Paris (FR)
(72) Inventeur: BONNET, Eric, 75015 Paris (FR)
(74) Mandataire: Thibon, Laurent
(86) Numéro de dépôt international: PCT/FR2007/052307
(87) Numéro de publication internationale: WO 2008/056085

(56) Documents cités:
- EP-A1- 1 126 358
- GB-A- 2 293 046

## Description

### Domaine de l'invention

La présente invention concerne un dispositif anti-intrusion destiné à protéger des objets, par exemple des circuits électroniques contenus dans un boîtier de façon à éviter que l'on ait accès auxdits objets ou à des informations contenues dans lesdits objets.

### Exposé de l'art antérieur

Un système de lecture et/ou d'écriture de données sur des cartes à puce ou des cartes magnétiques, par exemple un système utilisé pour réaliser des opérations de paiement, comprend généralement un boîtier, par exemple constitué de deux portions de boîtier, contenant un circuit imprimé auquel sont connectés les composants électroniques nécessaires au bon fonctionnement du système. Un tel système de lecture/écriture comprend généralement un ou plusieurs dispositifs anti-intrusion destinés à détecter si un individu tente d'ouvrir le boîtier.

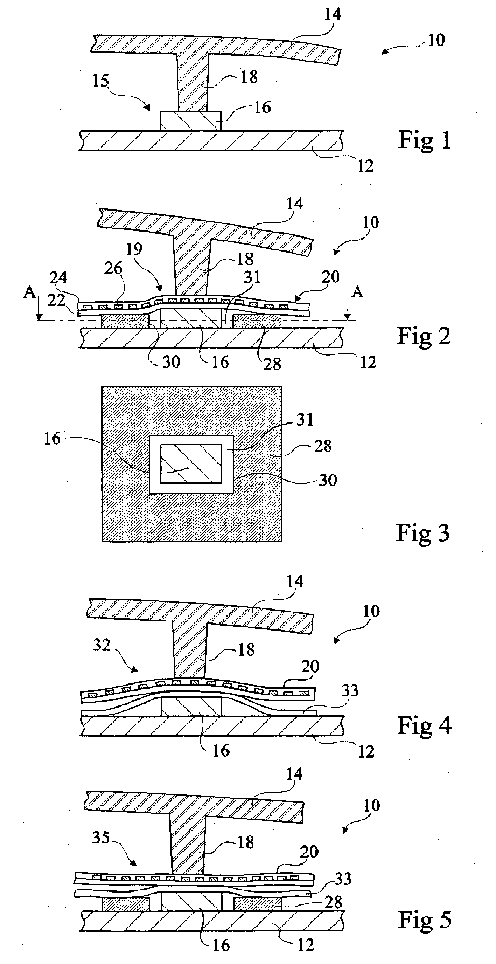

La figure 1 représente une coupe partielle et schématique d'un système de lecture/écriture 10 comprenant un circuit imprimé 12 contenu dans un boîtier, seule une portion de boîtier 14 étant représentée. Le système de lecture/écriture comprend un dispositif anti-intrusion 15 constitué d'un interrupteur 16 de petites dimensions, généralement appelé minirupteur, connecté au circuit imprimé 12 et actionné en permanence par la portion de boîtier 14 lorsque le boîtier est fermé correctement. Il s'agit, par exemple, de l'interrupteur commercialisé par la société ITT Industries sous la référence KSR. L'actionnement de l'interrupteur 16 est obtenu en exerçant sur celui-ci un appui avec une pression supérieure à un seuil donné. Pour ce faire, la portion de boîtier 14 comprend un pion 18 qui appuie en permanence sur l'interrupteur 16 lorsque le boîtier est fermé correctement. Le pion 18 peut ne pas être en contact direct avec l'interrupteur 16, un élément élastique, par exemple un ressort ou une pièce en silicone, pouvant être interposé entre le pion 18 et l'interrupteur 16.

Lorsqu'un individu retire la portion de boîtier 14, le pion 18 n'est plus en appui contre l'interrupteur 16. L'absence d'actionnement de l'interrupteur 16 est détecté par un circuit de traitement auquel l'interrupteur 16 est connecté. Le retrait de la portion de boîtier 14 est ainsi détecté.

Un inconvénient d'un tel dispositif anti-intrusion 15 est qu'il est relativement facile à neutraliser. En effet, un individu peut percer un trou dans la portion de boîtier 14 et introduire de la colle avec laquelle il fixe le pion 18 au circuit imprimé 12. Il peut alors scier le pion 18 et retirer la portion de boîtier 14. Le pion 18 restant solidaire du circuit imprimé 12, l'interrupteur 16 continue à être actionné bien que la portion de boîtier 14 ne soit plus présente de sorte que le retrait de la portion de boîtier 14 n'est pas détecté.

Les publications EP 1 126 358 et GB 2 293 046 décrivent des exemples de dispositifs anti-intrusion.

### Résumé de l'invention

La présente invention vise un dispositif anti-intrusion d'un système électronique comprenant un interrupteur actionné par un élément du boîtier du système électronique et dont la neutralisation, consistant par exemple à coller l'élément du boîtier à l'interrupteur, est difficile.

Selon un autre objet de la présente invention, le dispositif anti-intrusion a une structure simple et est facile à réaliser.

Pour atteindre tout ou partie de ces objets ainsi que d'autres, un aspect de la présente invention prévoit un dispositif anti-intrusion d'un boîtier comprenant un interrupteur fixé à un support contenu dans le boîtier ; une membrane souple interposée entre l'interrupteur et une portion interne du boîtier, ladite portion exerçant, lorsque le boîtier est fermé, une pression sur l'interrupteur par l'intermédiaire de la membrane ; et au moins un élément de protection, distinct de la membrane et de l'interrupteur, et interposé entre la membrane et le support au moins autour de l'interrupteur.

Selon un exemple de réalisation, l'élément de protection est une entretoise fixée au support et entourant l'interrupteur, la membrane recouvrant l'entretoise.

Selon un exemple de réalisation, l'entretoise est séparée de l'interrupteur par un interstice.

Selon un exemple de réalisation, l'entretoise est en polytétrafluoroéthylène.

Selon un exemple de réalisation, l'entretoise a une épaisseur inférieure ou égale à l'épaisseur de l'interrupteur.

Selon un exemple de réalisation, l'élément de protection est un film souple interposé entre la membrane et l'interrupteur.

Selon un exemple de réalisation, le dispositif comprend une entretoise fixée au support et entourant l'interrupteur et un film souple, interposé entre la membrane et l'interrupteur, le film recouvrant l'entretoise.

Selon un exemple de réalisation, la membrane est constituée d'un empilement d'au moins deux films souples, des pistes conductrices étant disposées entre lesdits films.

Un aspect de la présente invention prévoit un système électronique, notamment un système de lecture/écriture de données sur une carte, comprenant un boîtier et un dispositif anti-intrusion tel que défini précédemment.

Selon un exemple de réalisation, le support est un circuit imprimé.

### Brève description des dessins

Ces objets, caractéristiques et avantages, ainsi que d'autres de la présente invention seront exposés en détail dans la description suivante d'exemples de réalisation particuliers faite à titre non-limitatif en relation avec les figures jointes parmi lesquelles :
la figure 1, précédemment décrite, représente une coupe schématique d'un dispositif anti-intrusion classique d'un système de lecture/écriture de carte ;
la figure 2 représente une coupe schématique d'un exemple de réalisation d'un dispositif anti-intrusion selon l'invention ;
la figure 3 est une coupe de la figure 2 selon la ligne A-A ; et
les figures 4 et 5 sont des coupes schématiques d'autres exemples de réalisation de dispositifs anti-intrusion selon l'invention.

### Description détaillée

Par souci de clarté, de mêmes éléments ont été désignés par de mêmes références aux différentes figures. En outre, les diverses figures ne sont pas tracées à l'échelle.

Pour rendre plus difficile la neutralisation d'un dispositif anti-intrusion dans lequel un élément de boîtier actionne un interrupteur disposé, par exemple, sur un circuit imprimé, la demanderesse a modifié le dispositif anti-intrusion 15 représenté en figure 1 en plaçant une membrane entre le pion 18 et l'interrupteur 16. Plus précisément, la demanderesse a utilisé une membrane de protection de type treillis constituée de l'empilement d'au moins deux films isolants et souples. Des pistes conductrices, prises en sandwich entre les films, forment une ou plusieurs lignes de sécurité connectées à leur extrémité à un circuit de traitement. Le circuit de traitement est adapté à détecter une interruption des lignes de sécurité, ce qui correspond à une perforation de la membrane de protection.

L'interposition d'une membrane de protection entre le pion 18 et l'interrupteur 16 rend plus difficile la neutralisation du dispositif anti-intrusion. Toutefois, un individu peut parvenir à introduire de la colle entre la membrane de protection et l'interrupteur 16 depuis les bords de la membrane de protection, c'est-à-dire sans la perforer. Il peut donc coller le pion 18 à la membrane de protection et coller la membrane de protection à l'interrupteur 16 de sorte que le pion 18, la membrane de protection et l'interrupteur 16 deviennent solidaires. Dans ce cas, comme cela a été décrit précédemment, en sciant le pion 18, la portion de boîtier 14 peut être retirée sans que cela ne soit détecté.

La demanderesse a mis en évidence qu'il était nécessaire de prévoir un dispositif supplémentaire qui rende particulièrement difficile le collage de la membrane de protection à l'interrupteur 16 et au circuit imprimé 12 dans une région entourant l'interrupteur 16. De ce fait, même si un individu parvient à coller le pion 18 à la membrane de protection, à coller la membrane de protection au circuit imprimé 12 à distance de l'interrupteur 16, et à scier le pion 18, lors du retrait de la portion de boîtier 14, la souplesse de la membrane de protection fait qu'elle se déforme et ne peut pas exercer une pression suffisante sur l'interrupteur 16 pour l'actionner. L'absence d'actionnement de l'interrupteur 16 est alors détecté.

La figure 2 représente un exemple de réalisation d'un dispositif anti-intrusion 19 selon l'invention. Par rapport au dispositif anti-intrusion 15 décrit précédemment en relation avec la figure 1, une membrane de protection de type treillis 20 est interposée entre le pion 18 et l'interrupteur 16. Lorsque le boîtier est fermé correctement, le pion 18 met en appui la membrane de protection 20 contre l'interrupteur 16, assurant ainsi l'actionnement de l'interrupteur 16.

La membrane de protection 20 est du type treillis et est constituée de l'empilement d'au moins deux films isolants et souples 22, 24, ayant plusieurs dizaines de micromètres d'épaisseur, et réalisés par exemple en polyéthylène téréphtalate (PET), en polyéthylène naphtalate (PEN) ou en polyimide, par exemple le produit commercialisé par Du Pont sous l'appellation Kapton. Des pistes conductrices 26, par exemple en cuivre, sont prises en sandwich entre les films 22, 24. Les pistes 26 forment une ou plusieurs lignes de sécurité connectées à leur extrémité à un circuit de traitement, non représenté. Le circuit de traitement est adapté à détecter une interruption des lignes de sécurité, ce qui correspond à une tentative d'accès au circuit imprimé 12.

Pour rendre difficile le collage de la membrane de protection 20 à l'interrupteur 16 et à la portion du circuit imprimé 12 entourant l'interrupteur 16, le dispositif anti-intrusion 19 comprend une entretoise 28 interposée entre la membrane de protection 20 et le circuit imprimé 12, et entourant l'interrupteur 16. L'épaisseur de l'entretoise 28 peut être légèrement inférieure à celle de l'interrupteur 16 pour ne pas gêner le contact entre la membrane de protection 20 et l'interrupteur 16. A titre d'exemple, l'interrupteur 16 a une épaisseur de l'ordre de 1,7 mm et l'entretoise 28 a une épaisseur de l'ordre de 1 mm.

La figure 3 est une coupe de la figure 2 selon la ligne A-A. A titre d'exemple, l'interrupteur 16 peut avoir, selon la coupe A-A, une forme rectangulaire de 6 mm de longueur sur 3,6 mm de largeur. L'entretoise 28 peut alors avoir, selon la coupe A-A, un contour extérieur rectangulaire de 25 mm par 20 mm de côté, et comprendre une ouverture intérieure rectangulaire 30. L'interrupteur 16 est disposé dans l'ouverture 30, un interstice 31, par exemple de l'ordre de 0,5 mm, séparant l'interrupteur 16 de l'entretoise 28. De façon avantageuse, l'entretoise 28 est constituée d'un matériau à faible adhérence. Il s'agit, par exemple, de polytétrafluoroéthylène (PTFE) couramment appelé téflon, marque déposée par DuPont.

Le dispositif anti-intrusion 19 permet de rendre particulièrement difficile le collage de la membrane de protection 20 à l'interrupteur 16 et/ou au circuit imprimé 12 tout autour de l'interrupteur 16. En effet, l'entretoise 28 qui entoure l'interrupteur 16 tend à s'opposer au passage de la colle introduite depuis les bords de la membrane de protection 20. La colle a alors tendance à se répandre à la périphérie de l'entretoise 28 sans parvenir jusqu'à l'interrupteur 16. De ce fait, au niveau de l'interrupteur 16, la membrane de protection 20 n'est pas collée ni à l'interrupteur 16 ni au circuit imprimé 12. Ainsi, même si le pion 18 est collé à la membrane de protection 20 et est scié, la souplesse de la membrane de protection 20 fait que lorsque la portion de boîtier 14 est retirée, la membrane de protection 20 se déforme et n'exerce pas une pression suffisante sur l'interrupteur 16 pour l'actionner. L'absence d'actionnement de l'interrupteur 16 peut alors être détectée.

L'entretoise 28 permet, en outre, de diminuer la déformation de la membrane de protection 20 au niveau des bords de l'interrupteur 16. En effet, un interrupteur 16 comprend généralement une enceinte de protection pouvant avoir des bords tranchants. L'entretoise 28 permet alors de limiter toute détérioration de la membrane de protection 20 au niveau des arêtes de l'interrupteur 16.

La figure 4 représente un autre exemple de réalisation de dispositif anti-intrusion 32 selon l'invention. Selon cet exemple de réalisation, un film 33 est interposé entre la membrane de protection 20 et l'interrupteur 16. Le film 33 peut avoir la structure d'une membrane de protection de type treillis analogue à la membrane de protection 20. Toutefois, il peut être avantageux que le film 33 soit constitué en totalité d'un matériau souple et isolant. En effet, il prévient alors les risques de court-circuit entre la membrane de protection 20 et l'interrupteur 16. A titre d'exemple, le film 33 a une épaisseur de l'ordre de 150 micromètres et est réalisé en polyéthylène téréphtalate (PET). Le film 33 n'est pas nécessairement présent sur la totalité du circuit imprimé 12, mais peut être prévu seulement au niveau de l'interrupteur 16 et autour de celui-ci.

Le dispositif anti-intrusion 32 permet de rendre particulièrement difficile l'introduction de colle simultanément entre le film 33 et l'interrupteur 16, ou le circuit imprimé 12 autour de l'interrupteur 16, et l'introduction de colle entre la membrane de protection 20 et le film 33 au niveau de l'interrupteur 16. En particulier, même si un individu parvient à introduire de la colle entre la membrane de protection 20 et le film 33 depuis un bord de la membrane de protection 20, la colle peut difficilement se répandre jusqu'à la région autour de l'interrupteur 16. En effet, la pression exercée par le pion 18 sur la membrane de protection 20 et le film 33 tend à empêcher la progression de la colle dans cette région. De ce fait, même si un individu parvient à coller le pion 18 à la membrane de protection 20 et à scier le pion 18, la souplesse de la membrane de protection 20 et du film 33 fait que, lorsque la portion de boîtier 14 est retirée, la membrane de protection 20 et le film 33 se déforment et n'exercent pas une pression suffisante sur l'interrupteur 16 pour le maintenir actionné. L'absence d'actionnement de l'interrupteur 16 peut alors être détectée.

La figure 5 représente un autre exemple de réalisation de dispositif anti-intrusion 35 qui comprend les caractéristiques des deux exemples de réalisation décrits précédemment. En effet, selon cet exemple de réalisation, l'entretoise 28 entoure l'interrupteur 16 et le film 33 est placé entre la membrane de protection 20 et l'interrupteur 16 et recouvre l'entretoise 28. Le dispositif anti-intrusion 35 présente l'avantage de rendre encore plus difficile toute tentative de neutralisation par introduction de colle. En effet, le film 33 rend difficile le collage de la membrane de protection 20 au film 33 au niveau de l'interrupteur 16, et l'entretoise 28 rend difficile le collage du film 33 à l'interrupteur 16 ou au circuit imprimé 12 au voisinage de l'interrupteur 16.

Bien entendu, la présente invention est susceptible de diverses variantes et modifications qui apparaîtront à l'homme de l'art. En particulier, bien que les exemples de réalisation décrits précédemment portent sur un seul dispositif anti-intrusion, il est clair qu'un système électronique à boîtier peut comprendre plusieurs dispositifs anti-intrusion selon les exemples de réalisation décrits précédemment.

## Revendications

1. Système électronique (10) comprenant un boîtier (14), un support (12) contenu dans le boîtier et un dispositif anti-intrusion (19 ; 32 ; 35) du boîtier (14) comprenant :
un interrupteur (16) fixé au support (12) ;
une membrane (20) souple interposée entre l'interrupteur et une portion (18) interne du boîtier, ladite portion exerçant, lorsque le boîtier est fermé, une pression sur l'interrupteur par l'intermédiaire de la membrane ; et
au moins un élément de protection (28 ; 33), distinct de la membrane et de l'interrupteur, et interposé entre la membrane et le support au moins autour de l'interrupteur.

2. Système selon la revendication 1, dans lequel l'élément de protection (28) est une entretoise fixée au support (12) et entourant l'interrupteur (16), la membrane recouvrant l'entretoise.

3. Système selon la revendication 2, dans lequel l'entretoise (28) est séparée de l'interrupteur (16) par un interstice (31).

4. Système selon la revendication 2 ou 3, dans lequel l'entretoise (28) est en polytétrafluoroéthylène.

5. Système selon l'une quelconque des revendications 2 à 4, dans lequel l'entretoise (28) a une épaisseur inférieure ou égale à l'épaisseur de l'interrupteur (16).

6. Système selon la revendication 1, dans lequel l'élément de protection (33) est un film souple interposé entre la membrane (20) et l'interrupteur (16).

7. Système selon la revendication 1, comprenant une entretoise (28) fixée au support (12) et entourant l'interrupteur (16) et un film souple (33), interposé entre la membrane (20) et l'interrupteur, le film recouvrant l'entretoise.

8. Système selon l'une quelconque des revendications 1 à 7, dans lequel la membrane (20) est constituée d'un empilement d'au moins deux films souples (22, 24), des pistes conductrices (26) étant disposées entre lesdits films.

9. Système selon l'une quelconque des revendications 1 à 8, dans lequel le système est un système de lecture/écriture de données sur une carte.

10. Système selon la revendication 9, dans lequel le support (12) est un circuit imprimé.

## Patentansprüche

1. Ein elektronisches System (10), welches eine Packung (14), einen Träger (12) enthalten in der Packung und eine Anti-Eindringvorrichtung (19; 32; 35) der Packung (14) aufweist, wobei folgendes vorgesehen ist:
ein Schalter (16) angebracht am Träger (12);
eine flexible Membran (20) angeordnet zwischen dem Schalter und einem inneren Teil (18) der Packung, wobei der erwähnte Teil dann wenn die Packung geschlossen ist einen Druck auf den Schalter über die Membran ausübt; und
mindestens ein Schutzelement (28; 33) unterschiedlich von der Membran und vom Schalter und zwar angeordnet zwischen der Membran und dem Träger mindestens um den Schalter herum.

2. Das System nach Anspruch 1, wobei das Schutzelement (28) ein am Träger (12) angebrachtes Abstandselement ist und den Schalter (16) umgibt, wobei die Membran das Abstandselement abdeckt.

3. Das System nach Anspruch 2, wobei das Abstandselement (28) vom Schalter (16) durch einen Zwischenraum (31) getrennt ist.

4. Das System nach Anspruch 2 oder 3, wobei das Abstandselement (28) aus Polytetrafluoräthylen hergestellt ist.

5. Das System nach einem der Ansprüche 2 bis 4, wobei das Abstandselement (28) eine Dicke besitzt die kleiner ist als oder gleich der Dicke des Schalters (16).

6. Das System nach Anspruch 1, wobei das Schutzelement (33), ein flexibler Film angeordnet zwischen der Membran (20) und dem Schalter (16) ist.

7. Das System nach Anspruch 1, welches ein Abstandselement (28) angebracht am Träger (12) und den Schalter (16) umgebend aufweist und einen flexiblen Film (33) angeordnet zwischen der Membran (20) und dem Schalter, wobei der Film das Abstandselement abdeckt.

8. Das System nach einem der Ansprüche 1 bis 7, wobei die Membran (20) aus einem Stapel von mindestens zwei flexiblen Filmen (22, 24) gebildet ist, wobei leitende Bahnen (26) zwischen den Filmen angeordnet sind.

9. Das System nach einem der Ansprüche 1 bis 8, wobei das System ein System zum Lesen oder Schreiben von Daten von einer Karte oder in eine Karte ist.

10. Das System nach Anspruch 9, wobei der Träger (12) eine gedruckte Schaltung ist.

## Claims

1. An electronic system (10) comprising a package (14), a support (12) contained in the package, and an anti-intrusion device (19; 32; 35) of the package (14) comprising:
a switch (16) attached to the support (12);
a flexible membrane (20) interposed between the switch and an internal portion (18) of the package, said portion exerting, when the package is closed, a pressure on the switch via the membrane; and
at least one protection element (28; 33), different from the membrane and from the switch, and interposed between the membrane and the support at least around the switch.

2. The system of claim 1, wherein the protection element (28) is a spacer attached to the support (12) and surrounding the switch (16), the membrane covering the spacer.

3. The system of claim 2, wherein the spacer (28) is separated from the switch (16) by an interstice (31).

4. The system of claim 2 or 3, wherein the spacer (28) is made of polytetrafluoroethylene.

5. The system of any of claims 2 to 4, wherein the spacer (28) has a thickness smaller than or equal to the thickness of the switch (16).

6. The system of claim 1, wherein the protection element (33) is a flexible film interposed between the membrane (20) and the switch (16).

7. The system of claim 1, comprising a spacer (28) attached to the support (12) and surrounding the switch (16) and a flexible film (33), interposed between the membrane (20) and the switch, the film covering the spacer.

8. The system of any of claims 1 to 7, wherein the membrane (20) is formed of a stacking of at least two flexible films (22, 24), conductive tracks (26) being arranged between said films.

9. The system of any of claims 1 to 8, wherein the system is a system for reading/writing data from/into a card.

10. The system of claim 9, wherein the support (12) is a printed circuit
